Europäisches Patentamt

(19) **European Patent Office**

Office européen des brevets

(11) Veröffentlichungsnummer: **0 009 790**
**B1**

(12) **EUROPÄISCHE PATENTSCHRIFT**

(45) Veröffentlichungstag der Patentschrift:
**22.12.82**

(21) Anmeldenummer: **79103722.9**

(22) Anmeldetag: **01.10.79**

(51) Int. Cl.³: **G 01 F 23/22**, G 03 G 15/08

(54) Vorrichtung zur Anzeige des Unterschreitens einer bestimmten Füllhöhe des in einem Behälter befindlichen Dosiergutes.

(30) Priorität: **09.10.78 DE 2843937**

(43) Veröffentlichungstag der Anmeldung:
**16.04.80 Patentblatt 80/8**

(45) Bekanntmachung des Hinweises auf die Patenterteilung:
**22.12.82 Patentblatt 82/51**

(84) Benannte Vertragsstaaten:
**BE DE FR GB IT NL**

(56) Entgegenhaltungen:
**DE-A-2-053 141**
**US-A-3 643 629**

(73) Patentinhaber: **HOECHST AKTIENGESELLSCHAFT,
Postfach 80 03 20, D-6230 Frankfurt/Main 80 (DE)**

(72) Erfinder: **Neumann, Jürgen, Wachenheimerstrasse 29,
D-6237 Liederbach (DE)**

Vorrichtung zur Anzeige des Unterschreitens einer bestimmten Füllhöhe des in einem Behälter befindlichen Dosiergutes

Die Erfindung betrifft eine Vorrichtung zur Anzeige des Unterschreitens einer bestimmten Füllhöhe des in einem Behälter befindlichen Dosiergutes, mit einem Fühlerelement aus elektrisch leitendem Material, das an einer Welle im Inneren des Behälters derart befestigt ist, dass es bei vollem Behälter im Kontakt mit dem von einer Dosierbürste nachdosierbaren Dosiergut steht und beim Unterschreiten der bestimmten Füllhöhe durch Schliessen eines Kontakts ein elektrisches Signal an eine Anzeigeeinrichtung liefert.

Die Vorrichtung ist u.a. für den Einsatz in elektrofotografischen Kopiergeräten geeignet, die Behälter, gefüllt mit pulverförmigem Toner zum Nachdosieren des Entwicklergemisches enthalten. Die Entwicklung eines latenten Bildes auf einem Aufzeichnungsträger erfolgt bekannterweise derart, dass ein Entwicklergemisch, bestehend aus Toner- und Trägerteilchen, mit dem elektrostatischen Ladungsbild auf dem Aufzeichnungsträger in Berührung gebracht wird. Die Tonerteilchen erhalten bei der Vermischung mit den Trägerteilchen eine triboelektrische Aufladung einer bestimmten Polarität. Das von dem Ladungsbild ausgehende elektrische Feld zieht die Tonerteilchen an und löst sie von den Trägerteilchen. Infolge der dadurch bedingten Verarmung des Entwicklergemisches an Tonerteilchen muss ständig Toner dem Entwicklergemisch zugefügt werden, um die Gesamttonerkonzentration im Entwicklergemisch im wesentlichen konstant zu halten. Hierfür besteht ein Bedarf an einer Vorrichtung zum Erfassen des Füllstandes des Toners in dem Vorratsbehälter. Diese Vorrichtung muss den Verbrauch an Toner bzw. das Absinken des Füllstandes des Toners innerhalb des Behälters unter eine bestimmte Marke rechtzeitig anzeigen, damit das Bedienungspersonal den Behälter mit Toner nachfüllt und dadurch die Tonerkonzentration im Entwicklergemisch konstant gehalten wird, da nur dadurch ein Arbeiten des Kopiergeräts mit gleichmässiger Bildqualität der entwickelten Bilder gewährleistet ist.

Aus der DE-AS 2 053 141 bzw. der dazu korrespondierenden GB-PS 1 302 687 ist eine Einrichtung zum Ermitteln des Absinkens eines Entwicklungspulvervorrats einer elektrofotografischen Entwicklungsvorrichtung in einer Wanne bekannt, bei der die Erschöpfung des Entwicklungspulvervorrats durch Betätigen einer Signaleinrichtung angezeigt wird. Diese Vorrichtung weist eine Welle auf, die oberhalb und parallel zur Grundfläche der Wanne drehbar gelagert ist und eine Stange, die parallel und mit radialem Abstand zur Welle an dieser mittels federnder Glieder befestigt ist. Diese Stange dreht sich mit der Welle und weist eine stumpfe Seite auf, die das Eindringen der Stange in den Entwicklungspulvervorrat hemmt. Die federnden Glieder bestehen aus mehreren Schraubenfedern, deren Achsen von der Welle aus radial verlaufen, solange die Bewegung der Stange nicht gehemmt wird. Der Abstand der Stange von der Welle wird durch die federnden Glieder vergrössert, wenn der Vorrat des Entwicklungspulvers sich vermindert. Sobald der Abstand von der Welle einen bestimmten Betrag erreicht hat, wird die Signaleinrichtung betätigt. Die Federn halten die Stange so weit von der Welle entfernt, dass die Stange mit zwei elektrischen Kontakten in Berührung gelangt, wenn sich über den Kontakten kein Pulver mehr befindet, wodurch ein offener Signalkreis geschlossen und eine Lampe in diesem Kreis mit Strom versorgt wird. Die Federn sind genügend biegsam, so dass sie sich durchbiegen, wenn die Kontakte in der Wanne mit Entwicklungspulver bedeckt sind, wodurch erreicht wird, dass die Stange auf dem Pulvervorrat schwimmt und zwischen der Welle und den elektrischen Kontakten hindurchgleitet, ohne die letzteren zu berühren, solange genügend Entwicklungspulver in der Wanne ist.

Diese Vorrichtung ist mechanisch aufwendig und benötigt relativ viel Platz, der im Entwicklungsbehälter einer elektrofotografischen Vorrichtung im allgemeinen noch vorhanden ist, nicht jedoch in dem Behälter der Tonernachdosiervorrichtung. Dieser Behälter besitzt üblicherweise einen Durchmesser, der nur geringfügig grösser ist als der Durchmesser der im Behälter vorhandenen Dosierbürste und erstreckt sich über die Dosierbürste nach oben. Dies ist der Grund dafür, dass die bekannte Einrichtung aus Platzmangel in einer derartigen Tonernachdosiervorrichtung nicht untergebracht werden könnte.

Aus der DE-OS 2 261 253 ist eine Füllstandsmessvorrichtung bekannt, in der in einem Behälter eine mit den Tonerteilchen in Berührung stehende Fühleinrichtung beweglich gelagert ist, die bei einem Abstand der Tonerteilchen von der Fühleinrichtung aus einer ersten in eine zweite Stellung bewegt wird, welches das Unterschreiten eines für den optimalen Betrieb der Kopiermaschine vorgegebenen Pegels der in dem Vorratsbehälter vorhandenen Tonerteilchen anzeigt. Bei der Drehung aus der ersten in die zweite Position wird ein Schalter einer elektrischen Anordnung betätigt, um ein elektrisches Signal zu erzeugen, das eine Anzeigevorrichtung auslöst. Die Fühleinrichtung besteht aus einem Stabmagneten, der auf einer drehbar gelagerten Achse im Inneren des Vorratsbehälters angebracht ist, und aus zwei weiteren Stabmagneten, die an den Innenwänden des Vorratsbehälters befestigt sind. Im gefüllten Zustand des Vorratsbehälters ist der mit der Achse verbundene Stabmagnet im Toner eingetaucht, und seine Längsachse verläuft etwa im rechten Winkel zu den Längsachsen der beiden Stabmagneten, die miteinander fluchten. Sobald der Tonervorrat im Vorratsbehälter so weit abgesunken ist, dass der auf der Achse befindliche Stabmagnet freigegeben wird, führt dieser unter Einfluss der Magnetfeldlinien der beiden übrigen Stabmagnete eine Drehung um 90° aus und kommt mit diesen beiden Stabmagneten in einer Ebene zu liegen.

Diese bekannte Vorrichtung ist durch die Verwendung von zumindest drei Stabmagneten relativ teuer in der Herstellung und macht es erforderlich, dass vor dem Nachfüllen von Toner in den Vorratsbehälter der auf der Achse aufsitzende Stabmagnet manuell in seine ursprüngliche Lage, das ist die erste Position, gebracht werden muss, um eine fehlerfreie Anzeige des Füllstandes sicherzustellen.

Beiden bekannten Vorrichtungen ist gemeinsam, dass sie platzaufwendig und teuer sind, da sie aus mehreren mechanischen Teilen bestehen und keinen Gebrauch von schon vorhandenen Elementen der Dosiervorrichtung machen.

Aufgabe der Erfindung ist es, eine einfache, mechanisch arbeitende Vorrichtung für die Anzeige des Unterschreitens eines vorbestimmten Füllstandes in einem Dosiergut-Behälter zu schaffen, die geringen Platzbedarf hat und durch Ausnutzung vorhandener Teile der Nachdosierungsvorrichtung kostengünstig aufgebaut werden kann.

Diese Aufgabe wird erfindungsgemäss durch eine Vorrichtung der eingangs beschriebenen Art dadurch gelöst, dass die Vorrichtung einen Kontaktstift im Inneren des Behälters umfasst, dass das Fühlerelement die Gestalt einer elastischen Kontaktfahne aufweist, die radial an der Welle der Dosierbürste befestigt ist, nach dem Unterschreiten der bestimmten Füllhöhe im Behälter gestreckt von der Welle absteht und bei jeder Umdrehung der Dosierbürste einmal gegen den Kontaktstift zum Anliegen kommt, der oberhalb der Dosierbürste ortsfest an einer der seitlichen Gehäusewände des Behälters angebracht ins Behälterinnere ragt, und dass ein ausserhalb des Behälters an einem nach aussen geführten Lagerzapfen der Welle anliegender, mit Masse verbundener Schleifkontakt sowie eine ausserhalb des Behälters befindliche, mit dem Kontaktstift verbundene Anschlussfahne, die an eine Flip-Flop-Schaltung angeschlossen ist, vorgesehen sind.

Die weitere vorteilhafte Ausgestaltung der Erfindung ergibt sich aus den Patentansprüchen 2 bis 8.

Mit der Erfindung werden die Vorteile einer mechanisch sehr einfach aufgebauten und äusserst kostengünstig zu fertigenden Vorrichtung erzielt, die geringen Platzbedarf besitzt und auch ohne grossen Aufwand nachträglich in Nachdosiervorrichtungen, die Dosierbürsten aufweisen, eingebaut werden kann.

Die Erfindung wird im folgenden anhand eines zeichnerisch dargestellten Ausführungsbeispiels näher erläutert. In der Zeichnung zeigen:

Fig. 1 schematisch eine perspektivische Teilansicht der erfindungsgemässen Vorrichtung in einem Nachdosierbehälter,

Fig. 2 und 3 im Schnitt Seitenansichten des Dosierbehälters im leeren bzw. im gefüllten Zustand, und

Fig. 4 ein Detail einer Kontaktfahne der erfindungsgemässen Vorrichtung.

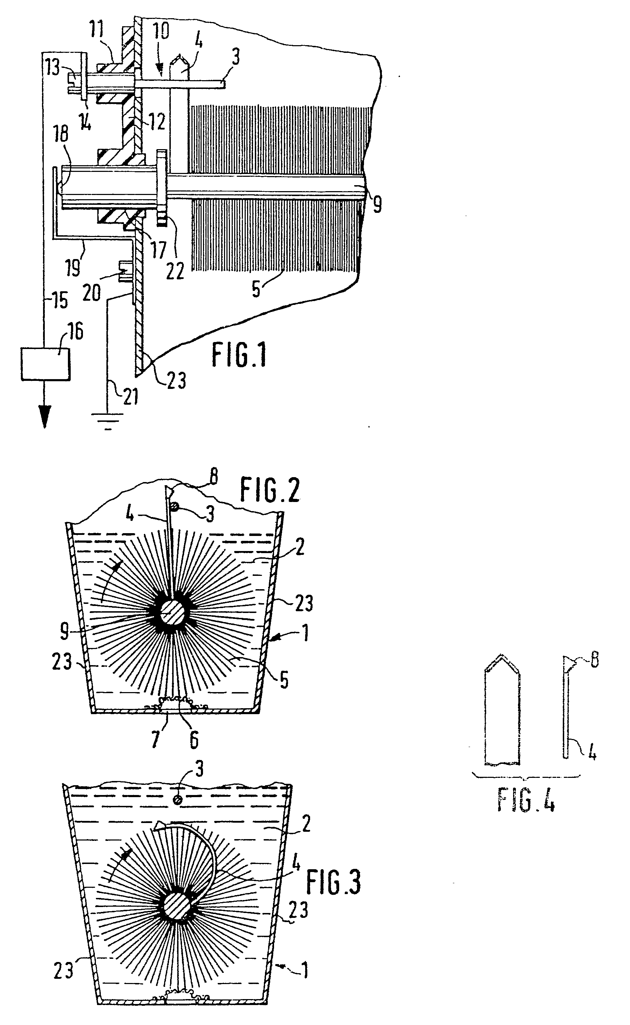

Fig. 1 zeigt im teilweise aufgebrochenen Zustand einen Behälter 1, der ein Dosiergut 2, beispielsweise Toner, enthält. Eine Vorrichtung zur Anzeige des Unterschreitens einer bestimmten Füllhöhe des in dem Behälter 1 befindlichen Dosiergutes 2 wird in ihrer Gesamtheit mit 10 bezeichnet und umfasst einen Kontaktstift 3, eine Kontaktfahne 4, einen Schleifkontakt 19, der an einem Lagerzapfen 17 einer Welle 9 einer Dosierbürste 5 anliegt und über eine Leitung 21 mit Masse verbunden ist, sowie eine Anschlussfahne 14, die über eine Leitung 15 mit einer Flip-Flop-Schaltung 16 in Verbindung steht, von der aus eine Signalleitung an eine nichtdargestellte Anzeigeeinrichtung führt. Die Kontaktfahne 4 ist aus elektrisch leitendem Material wie einem Messing- oder Stahlfederblech, das beispielsweise eine Dicke von ca. 0,025 mm, eine Breite von 5 mm und eine Länge von 30 mm besitzt. Anstelle von Metall kann für die Kontaktfahne auch ein elastisches Folienmaterial verwendet werden, das eine elektrisch leitende Oberfläche aufweist, die durch bekannte Verfahren wie Plattieren, Galvanisieren, Metallzerstäubung, u.dgl. hergestellt wird.

Die Kontaktfahne 4 ist an der Welle 9 der Dosierbürste 5 für die Nachdosierung des Dosiergutes 2 befestigt. Dies kann durch Verlöten oder Einklemmen des einen Endes der Kontaktfahne 4 mit der Welle 9 geschehen. Das freie Ende der Kontaktfahne 4 ist mit abgewinkelten Ecken 8 (Fig. 4) versehen.

Im Boden des Behälters 1 ist eine Dosieröffnung 7 vorhanden, die von einem Dosiersieb 6 abgeschlossen wird. Durch die Umdrehungen der Dosierbürste 5 wird das Dosiergut 2, beispielsweise Toner, durch Borsten der Dosierbürste 5 durch das Dosiersieb 6 hindurch gefördert und gelangt in den nichtdargestellten Entwicklervorrat.

Der Kontaktstift 3 ist oberhalb der Dosierbürste 5 ortsfest an eine der Gehäusewände 23 des Behälters 1 angebracht. Dabei wird der Abstand des Kontaktstiftes von der Welle 9 der Dosierbürste 5 grösser als der Radius der Dosierbürste 5 gewählt und beträgt bei einem praktischen Beispiel 25 mm, wenn der Radius der Dosierbürste 20 mm ist.

Der Kontaktstift 3 ist durch die eine Gehäusewand 23 des Behälters 1 elektrisch isoliert mittels eines Isolierstücks 12 hindurchgeführt, das von einem Lager 11 aus Isolationsmaterial an der Aussenseite der Gehäusewand 23 aufgenommen wird. Mit einer Schraube 13 ist eine Anschlussfahne 14 mit dem Kontaktstift 3 in Verbindung. Von der Anschlussfahne 14 führt die Leitung 15 zu der Flip-Flop-Schaltung 16. Bei jeder Berührung des Kontaktstiftes 3 durch die Kontaktfahne 4 wird die Flip-Flop-Schaltung 16 angestossen und gibt ein Signal an die schon erwähnte, nichtdargestellte Anzeigeeinrichtung ab.

Die Welle 9 der Dosierbürste 5 geht in einen Lagerbund 22 eines Lagerzapfens 17 über, der elektrisch isoliert durch die eine Gehäusewand 23 des Behälters 1 geführt ist. Auf der Stirnfläche des Lagerzapfens 17 befindet sich eine Kontaktfläche 18, beispielsweise Teil einer Kugel, gegen die ein Schleifkontakt federnd anliegt. Der Schleifkontakt 19 kann ein zweimal gewinkeltes Federblech sein, das mit der einen Winkelfläche an der Aussenseite der Gehäusewand 23 anliegt und an dieser mittels einer Schraube 20 befestigt ist. Diese Winkelfläche des Schleifkontakts 19 ist über eine Leitung 21 mit Masse verbunden.

Solange die Dosierbürste 5 mit Dosiergut 2 bedeckt ist, legt sich die Kontaktfahne 4, wie in Fig. 3 schematisch dargestellt ist, an den Umfang der Dosierbürste 5 an. Fällt der Füllstand des Dosierguts 2 so weit ab, dass die Bürste frei wird, so richtet sich die Kontaktfahne 4 bei jeder Umdrehung der Dosierbürste 5 auf und berührt dabei den Kontaktstift 3, wie in Fig. 2 gezeigt ist, wodurch der Stromkreis beginnend mit dem Masseanschluss über den Schleifkontakt 19, den Lagerzapfen 17, die Welle 9, die Kontaktfahne 4, den Kontaktstift 3, die Anschlussfahne 14, die Leitung 15 und die Flip-Flop-Schaltung 16 zu der nichtdargestellten Anzeigeeinrichtung geschlossen wird. Dabei speist die Flip-Flop-Schaltung 16 ein Anzeigesignal in die Anzeigeeinrichtung ein. Sobald das Dosiergut 2 unter die vorgegebene Füllstandshöhe abgesunken ist, wird beim Nachfüllen von Dosiergut die Kontaktfahne 4 für eine konstante Zeit, die etwa der Zeit für eine halbe Umdrehung der Dosierbürste 5 entspricht, an den Umfang der Bürste angestellt, damit der Kontakt zwischen der Kontaktfahne und dem Kontaktstift beim Nachfüllen des Dosiergutes unterbrochen ist und bei erneutem Drehen der Dosierbürste 5 kein Anzeigesignal bei gefülltem Behälter 1 auftreten kann.

**Patentansprüche**

1. Vorrichtung zur Anzeige des Unterschreitens einer bestimmten Füllhöhe des in einem Behälter befindlichen Dosiergutes, mit einem Fühlerelement aus elektrisch leitendem Material, das an einer Welle im Inneren des Behälters derart befestigt ist, dass es bei vollem Behälter im Kontakt mit dem von einer Dosierbürste nachdosierbaren Dosiergut steht und beim Unterschreiten der bestimmten Füllhöhe durch Schliessen eines Kontakts ein elektrisches Signal an eine Anzeigeeinrichtung liefert, dadurch gekennzeichnet, dass die Vorrichtung (10) einen Kontaktstift (3) im Inneren des Behälters (1) umfasst, dass das Fühlerelement die Gestalt einer elastischen Kontaktfahne (4) aufweist, die radial an der Welle (9) der Dosierbürste (5) befestigt ist, nach dem Unterschreiten der bestimmten Füllhöhe im Behälter (1) gestreckt von der Welle (9) absteht und bei jeder Umdrehung der Dosierbürste (5) einmal gegen den Kontaktstift (3) zum Anliegen kommt, der oberhalb der Dosierbürste (5) ortsfest an einer der seitlichen Gehäusewände (23) des Behälters (1) angebracht ins Behälterinnere ragt, und dass ein ausserhalb des Behälters (1) an einem nach aussen geführten Lagerzapfen (17) der Welle (9) anliegender, mit Masse verbundener Schleifkontakt (19) sowie eine ausserhalb des Behälters (1) befindliche, mit dem Kontaktstift (3) verbundene Anschlussfahne (14), die an eine Flip-Flop-Schaltung (16) angeschlossen ist, vorgesehen sind.

2. Vorrichtung nach Anspruch 1, dadurch gekennzeichnet, dass der Abstand des Kontaktstiftes (3) von der Welle (9) grösser als der Radius der Dosierbürste (5) ist.

3. Vorrichtung nach Anspruch 1, dadurch gekennzeichnet, dass die Länge der Kontaktfahne (4) grösser als der Abstand des Kontaktstiftes (3) zu der Welle (9) der Dosierbürste (5) ist.

4. Vorrichtung nach Anspruch 3, dadurch gekennzeichnet, dass die Kontaktfahne (4) mit einem Ende an der Welle (9) durch Löten oder Klemmen befestigt ist und dass das andere, freie Ende der Kontaktfahne (4) mit abgewinkelten Ecken (8) versehen ist.

5. Vorrichtung nach Anspruch 4, dadurch gekennzeichnet, dass die Kontaktfahne (4) aus einem Messing- oder Stahl-Federblech der Dicke von ca. 0,025 mm besteht, das sich bei gefülltem Behälter (1) durch das Gewicht des auf der Dosierbürste (5) aufliegenden Dosiergutes (2) an den Aussenumfang der Dosierbürste (5) anlegt.

6. Vorrichtung nach Anspruch 1, dadurch gekennzeichnet, dass der Kontaktstift (3) elektrisch isoliert durch die eine Gehäusewand (23) des Behälters (1) hindurchgeführt ist.

7. Vorrichtung nach einem oder mehreren der Ansprüche 1 bis 6, dadurch gekennzeichnet, dass die Welle (9) der Dosierbürste (5) mit dem Lagerzapfen (17) elektrisch isoliert durch die eine Gehäusewand (23) des Behälters (1) geführt ist und dass die Stirnfläche des Lagerzapfens (17) über eine Kontaktfläche (18) mit dem Schleifkontakt (19) in Verbindung steht.

8. Vorrichtung nach Anspruch 7, dadurch gekennzeichnet, dass der Schleifkontakt (19) gewinkelt ist, mit einer seiner Flächen an der Aussenseite der Gehäusewand (23) anliegt und an dieser mittels einer Schraube (20) befestigt ist.

**Claims**

1. Device for indicating that the level of a dosable material in a container has fallen below a predetermined level, with a sensing element of electrically conductive material, which is mounted on a shaft in the interior of the container such that the sensing element contacts the dosable material which is replenishable by means of a dosing brush, when the container is filled and supplies an electrical signal to an indicating device by closing a contact, when the level falls below the predetermined level, characterized in that the device (10) comprises a contact pin (3) in the interior of the container (1), wherein the sensing element with the shape of an elastic contact tongue (4), which is radially attached to the shaft (9) of the dosing brush (5), projects in stretched manner from the shaft (9) when the level in the container falls below the predetermined level and contacts the contact pin (3) once with each rotation of the dosing brush (5), the contact pin, attached to be stationary at one of the lateral casing walls (23) of the container (1) above the dosing brush, projects into the interior of the container, and wherein a sliding contact (19) which is at earth potential, rests outside of the container (1) against an outwardly guided bearing pivot (17) of the shaft (9), and a connecting lug (14) are provided, which is located outside of the container (1), attached to the contact pin (3) and connected to a flip-flop circuit (16).

2. Device according to claim 1, wherein the distance of the contact pin (3) from the shaft (9) is greater than the radius of the dosing brush (5).

3. Device according to claim 1, wherein the length of the contact tongue (4) is greater than the distance of contact pin (3) from the shaft (9) of the dosing brush (5).

4. Device according to claim 3, wherein the contact tongue (4) is attached with one end to the shaft (9) by means of soldering or crimping and the other, free end of the contact tongue (4) is provided with angled corners (8).

5. Device according to claim 4, wherein the contact tongue (4) consists of a sheet spring of brass or steel with a thickness of approximately 0.025 mm, which with a filled container (1) rests against the outer periphery of the dosing brush (5) due to the weight of the dosable material (2) resting on the dosing brush (5).

6. Device according to claim 1, wherein the contact pin (3) passes through one casing wall (23) of the container (1) in an electrically insulated manner.

7. Device according to one or more of claims 1 to 6, wherein the shaft (9) of the dosing brush (5) passes in an electrically insulated manner with a bearing pivot (17) through one casing wall (23) of the container (1) and the end face of the bearing pivot (17) is connected via a contact area (18) to the sliding contact (19).

8. Device according to claim 7, wherein the sliding contact (19) is angled, rests with one of its surfaces against the outside of the casing wall (23) and is attached to it by means of a screw (20).

**Revendications**

1. Dispositif indicateur de passage en-dessous d'un niveau de remplissage déterminé d'une matière à doser se trouvant dans un réservoir, comportant un élément palpeur en matériau bon conducteur électrique, qui est fixé sur un axe à l'intérieur du réservoir de manière que, le réservoir rempli, il se trouve en contact avec la matière à doser, répartissable par une brosse de dosage et qui, dès que le niveau de remplissage tombe en-dessous d'un repère déterminé provoque la fermeture d'un contact et fournit ainsi un signal électrique dirigé sur une installation de contrôle, caractérisé en ce que le dispositif (10) comporte une tige de contact (3) qui pénètre à l'intérieur du réservoir (1), en ce que l'élément palpeur présente la forme d'une lame de contact élastique (4), qui est fixée dans le sens radial sur l'axe (9) de la brosse de dosage (5) et qui, dès que le niveau de remplissage tombe en-dessous d'un repère déterminé à l'intérieur du réservoir (1), touche, à chaque tour de rotation de la brosse de dosage (5) en adoptant une position droite et redressée sur l'axe (9), la tige de contact (3) qui est fixée d'une manière inamovible sur l'une des parois latérales (23) du réservoir (1) et plus précisément au-dessus de la brosse de dosage (5) et pénètre à l'intérieur de ce réservoir (1) et en ce qu'à l'extérieur du réservoir (1) un contact glissant (19) relié à la masse est en contact avec le tourillon (17) de l'axe (9) saillant vers l'extérieur, alors qu'une lame de raccordement (14) fixée sur la tige de contact (3) à l'extérieur du réservoir (1) est reliée à un montage flip-flop (16).

2. Dispositif selon la revendication 1, caractérisé en ce que la distance entre la tige de contact (3) et l'axe (9) est supérieure au rayon de la brosse de dosage (5).

3. Dispositif selon la revendication 1, caractérisé en ce que la longueur de la lame de contact (4) est supérieure à la distance entre la tige de contact (3) et l'axe (9) de la brosse de dosage (5).

4. Dispositif selon la revendication 3, caractérisé en ce que l'une des extrémités de la lame de contact (3) est fixée sur l'axe (9) soit par soudage, soit par un procédé de calage, alors que l'extrémité libre de cette lame de contact (4) présente des angles biseautés (8).

5. Dispositif selon la revendication 4, caractérisé en ce que la lame de contact (4) se compose d'une tôle de ressort en laiton ou en acier d'une épaisseur d'environ 0,025 mm qui, lorsque le réservoir (1) est rempli, s'appuie sous le poids de la matière de dosage (2) portée par la brosse de dosage (5) contre le pourtour de cette dernière.

6. Dispositif selon la revendication 1, caractérisé en ce que la tige de contact (3) est protégée par une isolation électrique à la hauteur de son passage à travers l'une des parois (23) du réservoir (1).

7. Dispositif selon l'une ou plusieurs des revendications 1 à 6, caractérisé en ce que l'axe (9) de la brosse de dosage (5) est protégé par une isolation électrique en même temps que le tourillon (17) à la hauteur de leur passage à travers l'une des parois (23) du réservoir (1) et en ce que la paroi frontale du tourillon (17) est reliée, par l'intermédiaire d'une surface de contact (18), au contact glissant (19).

8. Dispositif selon la revendication 7, caractérisé en ce que le contact glissant (19) présente une forme coudée dont l'une des branches est en contact avec la face extérieure de la paroi (23) et en ce qu'il est fixé sur cette face extérieure de la paroi (23) à l'aide d'une vis (20).

FIG.1

FIG.2

FIG.3

FIG.4